# EUROPÄISCHE PATENTSCHRIFT

(11) **EP 0 728 269 B1**
(45) Veröffentlichungstag und Bekanntmachung des Hinweises auf die Patenterteilung: **23.04.1997**
(21) Anmeldenummer: 95900647.9
(22) Anmeldetag: 21.11.1994
(51) Int. Cl.: F16G 1/00, F16G 3/06, E05F 15/16

(54) **KRAFTÜBERTRAGUNGSELEMENT**
FORCE-TRANSMISSION ELEMENT
ELEMENT DE TRANSMISSION DE FORCE

(30) Priorität: 19.11.1993 DE 9317743 U
(43) Veröffentlichungstag der Anmeldung: 28.08.1996
(73) Patentinhaber: Hörmann KG Verkaufsgesellschaft, D-33803 Steinhagen (DE)
(72) Erfinder: HÖRMANN, Thomas, J., D-66606 St. Wendel (DE)
(74) Vertreter: Flügel, Otto, Dipl.-Ing.
(86) Internationale Anmeldenummer: DE9401367
(87) Internationale Veröffentlichungsnummer: WO9514182

(56) Entgegenhaltungen:
- EP-A- 0 367 118
- GB-A- K21 020
- GB-A- 182 326
- US-A- 5 010 688

## Beschreibung

Die Erfindung betrifft ein Kraftübertragungselement, insbesondere ein zugkraftübertragendes Gurtband für die Bewegung eines longitudinal geführt bewegbaren Gegenstandes, insbesondere für einen entlang einer Führungsschiene hin- und hergehend bewegbaren Mitnehmer, vorzugsweise zur Ankupplung an ein Torblatt, bevorzugt eines Garagentores oder dgl., welches aus zwei Trumen besteht, zumindest ein Antriebsglied und zumindest ein Abtriebsglied reibungsschlüssig über einen Teilumfangsbereich umschlingt und über diese Elemente hin-und herbewegbar ist, wobei zwei Enden des Kraftübertragungselementes über eine Kupplungseinrichtung zu einem längenveränderlichen Endlosband verbunden sind, welche eine Öffnung für wenigstens das zweite Ende des Kraftübertragungselementes hat, die von einem Steg in zwei Kammern unterteilt ist, wobei das Kraftübertragungselement über den Steg umgelenkt ist.

Derartige Kraftübertragungselemente sind aus dem Stand der Technik bekannt. Sie sind in der Regel als Gurtbänder, vorzugsweise aus textilem Material hergestellt und dienen zur Zugkraftübertragung einer rotatorisch auf ein Abtriebsglied, vorzugsweise eine Riemenscheibe übertragene Kraft. Insbesondere werden derartige Kraftübertragungselemente für die Bewegung eines longitudinal geführt bewegbaren Gegenstandes, nämlich eines Mitnehmers verwendet, der bspw. an einem Garagentor angekoppelt ist, welches in Führungsschienen zwischen einer Öffnungs- und einer Schließstellung hin- und herbewegbar ist. Hierbei ist der Mitnehmer an dem Kraftübertragungselement befestigt, bspw. verklebt oder verschraubt. Aus dem Stand der Technik sind verschiedene Möglichkeiten der Zugkraftübertragung mittels eines derartigen Kraftübertragungselementes bekannt. Bspw. sind derartige Einrichtungen bekannt, bei denen das Kraftübertragungselement nicht als umlaufendes, sondern als beidendig offenes Band ausgebildet ist. In diesem Fall ist ein Ende des Kraftübertragungselementes an einer angetriebenen Walze oder dgl. befestigt, auf welches es aufgewickelt oder von welcher es abgewickelt wird. Mit seinem zweiten Ende ist das Kraftübertragungselement ebenfalls an einer Walze befestigt, die jedoch nicht angetrieben ist. Auf diese Walze wird das Gurtband aufgerollt, wenn es von der angetriebenen Walze abgerollt wird. Das Aufrollen des Kraftübertragungselementes erfolgt hierbei vorzugsweise mittels einer Torsionsfeder, die beim Abrollen des Kraftübertragungselementes von der nicht angetriebenen Walze vorgespannt wird und ihre Vorspannung dann in eine Rotationsbewegung umsetzt, wenn das Kraftübertragungselement von der angetriebenen Walze abgerollt wird.

Die vorliegende Erfindung betrifft jedoch derartige Kraftübertragungselemente, welche als geschlossenes Band ausgebildet sind und somit über einen Obertrum und einen Untertrum verfügen. Derartige Kraftübertragungselemente können über zumindest zwei Walzen oder dgl. umlaufen, wobei bei der hier in Rede stehenden Bewegung eines Mitnehmers in der Regel eine Hin- und Herbewegung des Kraftübertragungselementes notwendig ist. Hierbei ist es bekannt, den Mitnehmer im Untertrum des Kraftübertragungselementes zu befestigen, so daß der Mitnehmer zwischen zwei Endstellungen bewegbar ist, welche zwischen den beiden Walzen angeordnet und mit der Öffnungs- bzw. Schließstellung übereinstimmend sind.

Es sind derartige Kraftübertragungselemente bekannt, die aus einem endlosen Textilband oder dgl. bestehen und auf entsprechende Walzen aufgelegt werden, wonach zumindest eine Walze in axialer Richtung des Bandes mittels einer Federeinrichtung oder dgl. gespannt wird. Nachteil dieser vorbekannten Kraftübertragungselemente ist jedoch, daß für jeden Einsatzbereich ein Kraftübertragungselement mit vorbestimmter Länge notwendig ist, da eine Längenveränderung des Kraftübertragungselementes nicht ohne weiteres möglich ist und eine Längenveränderung mit einer entsprechenden Spannvorrichtung für die Walzen nur in begrenztem Maße durchführbar ist.

Ein gattungsgemäßes Kraftübertragungselement ist beispielsweise aus der GB-A-182 326 bekannt. Dieses Kraftübertragungselement besteht aus einem Gurtband, dessen Enden mit einer Kupplungseinrichtung miteinander verbunden sind. Hierzu weist die Kupplungseinrichtung ein plattenförmiges Element auf, welches in seiner Oberfläche drei Öffnungen hat, die durch zwei Stege voneinander getrennt sind. Über diese Stege ist das Gurtband derart gelegt, daß die freien Enden des Gurtbandes zwischen den Randbereich der Kupplungseinrichtung und dem umlaufenden Ende des Gurtbandes angeordnet und kraftschlüssig gehalten ist.

Ferner ist aus der GB-A-21 020 A.D. 1910 eine Kupplungseinrichtung für ein Gurtband bekannt, an dem ein Ende des Gurtbandes fest mit der Kupplungseinrichtung verbunden ist, wogegen das zweite Ende des Gurtbandes im wesentlichen einstellbar an der Kupplungseinrichtung befestigbar ist.

Schließlich ist aus der US-A-5 010 688 ein Garagentorantrieb bekannt, bei welchem ein umlaufendes Gurtband an seinen beiden Enden mit einem Kupplungsstück verbunden ist, wobei das Kupplungsstück ortsfest mit den beiden Enden des Gurtbandes verbunden wird.

Ausgehend von diesem Stand der Technik liegt der Erfindung die **Aufgabe** zugrunde, ein gattungsgemäßes Kraftübertragungselement zu schaffen, das preisgünstig herstellbar und einbaubar ist und welches insbesondere eine leichte Nachspannung ohne Veränderung der Antriebselemente ermöglicht, wobei das Kraftübertragungselement in verschiedenen Antriebsvorrichtungen verwendbar und in einfacher Weise an die Gegebenheiten der Antriebsvorrichtungen anpaßbar sein soll.

Die **Lösung** dieser Aufgabenstellung sieht bei einem gattungsgemäßen Kraftübertragungselement vor, daß der Steg an seiner, dem ersten Ende des Kraftübertragungselementes abgewandten Seitenfläche unter einem Winkel abgeschrägt ist und daß ein die Öffnung im Bereich des, dem ersten Ende des Kraftübertragungselementes abgewandten Ende des Kupplungselements begrenzender Steg ebenfalls unter einem Winkel abgeschrägt ist, wobei die Schrägflächen im wesentlichen parallel zueinander verlaufen.

Ein derartig ausgebildetes Kraftübertragungselement hat insbesondere den Vorteil, daß es durch die Kupplungseinrichtung in einfacher Weise geöffnet und geschlossen werden kann und darüberhinaus längenveränderlich ist. Demzufolge kann das erfindungsgemäße Kraftübertragungselement in einfacher Weise an unterschiedliche Antriebsvorrichtungen, bspw. für Garagentore angepaßt werden. Es läßt sich jedoch nicht nur die Länge des Kraftübertragungselementes mittels der Kupplungseinrichtung einstellen, sondern auch die Spannung des Kraftübertragungselementes im Laufe des Betriebes der Antriebsvorrichtung nachführen. Somit sind auch die Wartungsarbeiten, die ein derartiger Antrieb erfordert, wesentlich vereinfacht.

Bei dem erfindungsgemäßen Kraftübertragungselement ist ferner vorgesehen, daß die Kupplungseinrichtung eine Öffnung für das zweite Ende des Kraftübertragungselementes hat, die von einem Steg in zwei Kammern unterteilt wird, wobei das Kraftübertragungselement über den Steg umgelenkt wird. Mittels einer derartig ausgebildeten Kupplungseinrichung können selbst sehr große Zugkräfte übertragen werden, ohne daß sich die beiden Enden des Kraftübertragungselementes im Bereich der Kupplungseinrichtung voneinander lösen.

Erfindungsgemäß wird eine Erhöhung der möglichen übertragbaren Zugkraft in einfacher Weise dadurch erzielt, daß der Steg an seiner, dem ersten Ende des Kraftübertragungselementes abgewandten Seitenfläche unter einem Winkel abgeschrägt ist, und daß ein die Öffnung im Bereich des, dem ersten Ende des Kraftübertragungselementes abgewandten Ende des Kupplungselementes begrenzender Steg ebenfalls unter dem Winkel abgeschrägt ist, wobei die Schrägflächen im wesentlichen parallel zueinander verlaufen. Neben dem zuvor beschriebenen Vorteil der Erhöhung der möglichen übertragbaren Zugkraft wird hierdurch auch der Vorteil erzielt, daß das Einfädeln des zweiten Endes des Kraftübertragungselementes in die Kupplungseinrichtung vereinfacht wird. Diese Vereinfachung wird insbesondere durch die beiden im wesentlichen parallel verlaufenden Schrägflächen ermöglicht.

Es ist grundsätzlich möglich, die Kupplungseinrichtung in einem der beiden Trume des Gurtbandes vorzusehen, je nach Platzangebot und/oder Zugänglichkeit. In einer besonderen Ausführungsform der Erfindung ist vorgesehen, daß die Kupplungseinrichtung in dem Trum angeordnet ist, der dem Trum mit der Verbindung zwischen Kraftübertragungselement und longitudinal geführtem Gegenstand gegenüberliegt. Diese Ausgestaltung hat insbesondere den Vorteil, daß keine Verkürzung des Bewegungsweges des Mitnahmeelementes dadurch eintritt, daß in dem den Mitnehmer aufweisenden Trum ein zusätzliches Element, nämlich die Kupplungseinrichtung, aufgenommen werden muß, welche nicht über das Abtriebs- oder Antriebsglied geführt werden kann.

Es ist ferner nach einem weiteren Merkmal der Erfindung vorgesehen, daß die Kupplungseinrichtung fest mit einem ersten Ende des Kraftübertragungselementes verbunden ist. Beispielsweise kann eine aus Kunststoff bestehende Kupplungseinrichtung um das eine Ende eines Textilgurtes gespritzt werden. Es ist jedoch auch denkbar, daß eine Kupplungseinrichtung mit dem Kraftübertragungselement, nämlich dem Gurtband, verschraubt, vernietet oder verklebt ist.

Eine Verbesserung der Reibkräfte zwischen der Kupplungseinrichtung und dem Kraftübertragungselement kann in einfacher Weise dadurch erzielt werden, daß der Steg an seiner einen Oberfläche strukturiert, vorzugsweise quer zur Längsrichtung des Kraftübertragungselementes geriffelt ausgebildet ist. Hierdurch wird in einfacher Weise eine Haftungsverbesserung zwischen den beiden aus unterschiedlichen Materialien bestehenden Elementen, nämlich der Kupplungseinrichtung einerseits und dem Kraftübertragungselement andererseits, erzielt.

Eine weitere Verbesserung der Reibkraft zwischen dem Kraftübertragungselement und der Kupplungseinrichtung wird dadurch erzielt, daß das Kraftübertragungselement im Bereich beider Oberflächen strukturiert ist. Eine derartige Strukturierung kan bspw. bereits dadurch erzielt werden, daß als Kraftübertragungselement ein aus Kunst- oder Naturfasern gewebter Gurt verwendet wird. Darüberhinaus wird eine mit hohen Zugkräften belastbare Verbindung zwischen Kraftübertragungselement und Kupplungseinrichtung dadurch erzielt, daß der Winkel der beiden Schrägflächen gegen die Zugrichtung des über den Steg laufenden zweiten Endes des Kraftübertragungselementes verläuft.

Nach einem weiteren alternativen Merkmal der Erfindung ist vorgesehen, daß das Kupplungselement im Bereich der Verbindung zwischen dem Kraftübertragungselement und dem longitudinal geführten Gegenstand angeordnet ist. Diese Anordnung im Bereich bspw. des Mitnehmers ist insoweit vorteilhaft, da insbesondere bei Garagentorantrieben dieser Bereich in einfacher Weise zugänglich ist und somit zu einer Vereinfachung von Einstell- und Wartungsarbeiten im Bereich des Torantriebes führt.

Schließlich ist nach einem weiteren Merkmal der Erfindung vorgesehen, daß die beiden unmittelbar hinter dem Steg aufeinanderliegenden Bereiche des Kraftübertragungselementes mit einem Schiebeelement oder dgl. zusammengehalten sind. Ein derartiges, bspw. als Tülle oder dgl. ausgebildetes Schiebeelement wird hierbei über das Ende der Kupplungseinrichtung derart geschoben, daß im Inneren des Schiebeelementes die beiden aufeinanderliegenden Bereiche des Kraftübertragungselementes angeordnet sind.

Weitere Vorteile und Merkmale der Erfindung ergeben sich aus der nachfolgenden Beschreibung der zugehörigen Zeichnung, in der eine bevorzugte Ausführungsform des erfindungsgemäßen Kraftübertragungselementes am Beispiel eines Torantriebes dargestellt ist. In der Zeichnung zeigt:
- Figur 1: eine teilweise geschnitten dargestellte Seitenansicht eines Antriebsgerätes;
- Figur 2: ein Kupplungselement in Dreiseitenansicht und
- Figur 3: eine vergrößert dargestellte Detailzeichnung eines Kupplungselementes in geschnitten dargestellter Seitenansicht.
- Figur 4: eine vergrößert dargestellte Detailzeichnung eines Kupplungselementes in geschnitten dargestellter Seitenansicht, bei der beide Bandenden an einer Kupplungseinrichtung einfädelbar und in soweit reibend bzw. klemmend festgelegt sind.

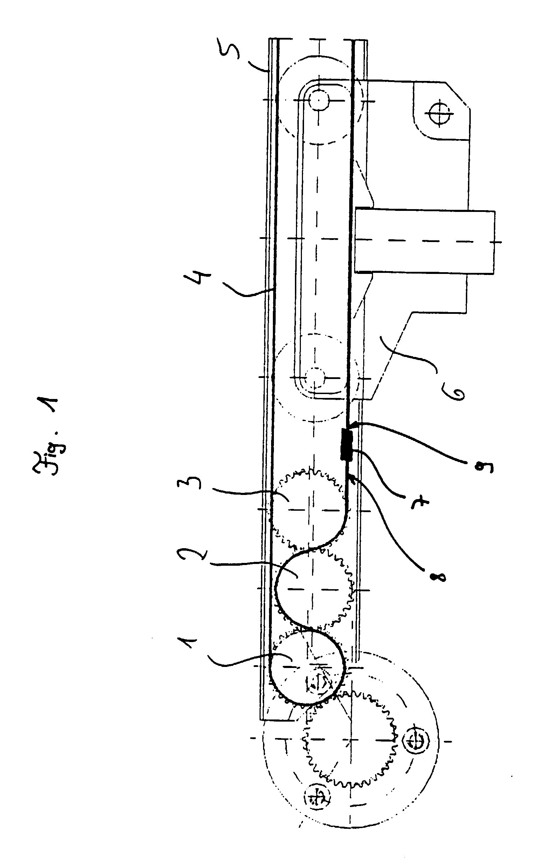

Ein in Figur 1 dargestelltes Antriebsgerät für einen etwa longitudinal geführt bewegbaren Gegenstand besteht aus einem rotatorisch bewegbaren Antriebsglied 1 in Form einer Walze, das reibungsschlüssig abtreibend an einem verzahnungsfreien, zugkraftübertragenden, abweichend von seiner Längserstreckung flexiblen, einen etwa longitudinalen Trum aufweisenden Kraftübertragungselement 4 angreift. Das Kraftübertragungselement 4 ist als Gurtband aus textilem Material ausgebildet. Auf das Antriebsglied 1 wird von einem nicht dargestellten Antriebsmotoraggregat ein Drehmoment über ein Getriebe übertragen, so daß das Kraftübertragungselement 4 in longitudinaler Richtung verschiebbar ist.

Das Antriebsglied 1 besteht aus einem zylindrischen Walzenkörper und einem koaxial dazu angeordnetne Zahnrad. Über den Walzenkörper läuft das Kraftübertragungselement 4. Dem Antriebsglied 1 sind zwei weitere Walzen 2 und 3 zugeordnet, die getrieblich formschlüssig an das Antriebsglied 1 angeschlossen sind, wobei die Walzen 2 und 3 ebenfalls aus einem zylindrischen Walzenkörper und einem koaxial dazu angeordnetem Zahnrad bestehen. Das Kraftübertragungselement 4 ist über die zylindrischen Walzenkörper der Walzen 2 und 3 derart geführt, daß das Kraftübertragungselement 4 die Walzen in einem Teilumfangsbereich umschlingt. In der Figur 1 nicht dargestellt ist ein Abtriebsglied, welches am gegenüberliegenden Ende einer Laufschiene 5 angeordnet ist und eine Umlenkwalze für das Kraftübertragungselement 4 darstellt. Auch dieses nicht dargestellte Abtriebsglied wird von dem Kraftübertragungselement 4 in einem Teilumfangsbereich umschlungen.

Die Walzen 2 und 3 sowie das Antriebsglied 1 und das Abtriebsglied sind gemeinsam mit dem Kraftübertragungselement 4 in der Laufschiene 5 angeordnet, die im Querschnitt im wesentlich C-förmig ausgebildet ist. Die Laufschiene 5 kann mittelbar oder unmittelbar an einem Bauwerk befestigt sein.

In der Laufschiene 5 ist ein Rollenlaufwagen 6 rollend geführt, der einerseits formschlüssig an dem Kraftübertragungselement 4 und andereseits an einem nicht dargestellten Torblatt eines Garagentores befestigt ist. Es ist aber auch denkbar, daß der Rollenlaufwagen 6 kraftschlüssig an dem Kraftübertragungselement 4 befestigt ist und von diesem abkuppelbar ist.

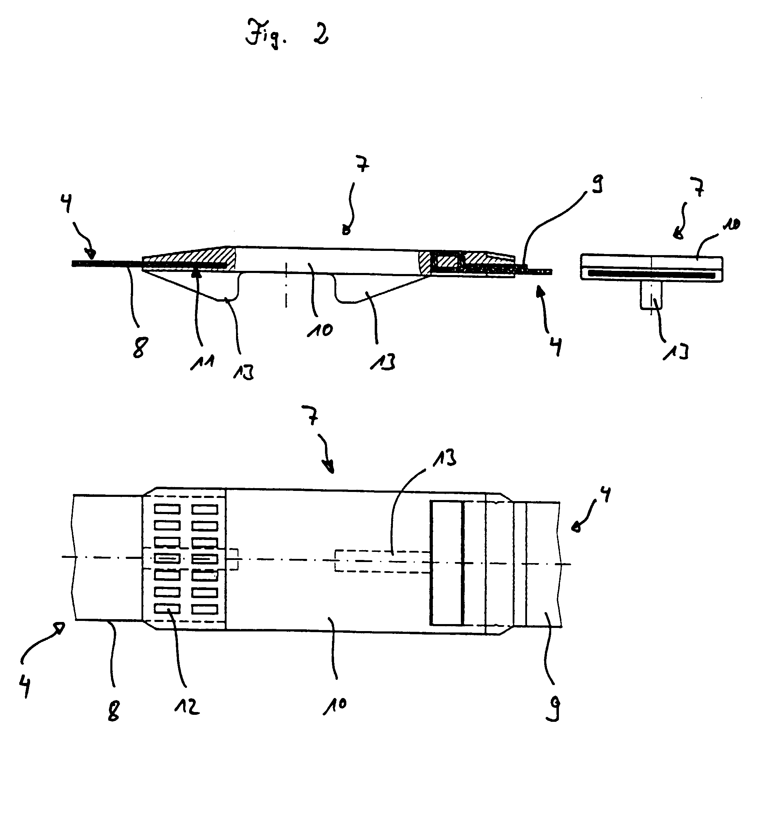

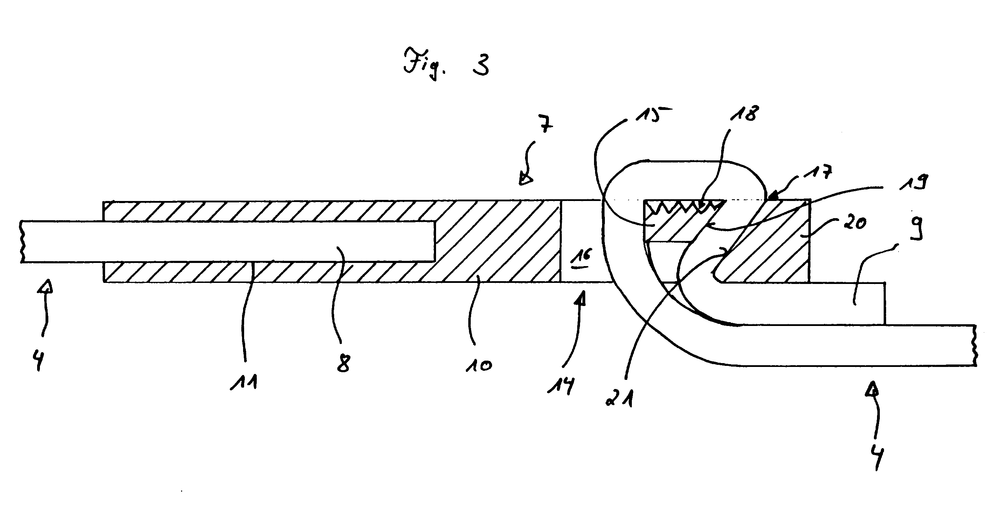

Das als Gurtband aus textilem Material bestehende Kraftübertragungselement weist zwei Enden 8 und 9 auf, die über eine Kupplungseinrichtung 7 zu einem Endlosgurt miteinander verbunden sind. Die Kupplungseinrichtung 7 wird nachfolgend anhand der Figuren 2 und 3 detailliert beschrieben.

Die Kupplungseinrichtung 7 besteht aus einem im wesentlichen quaderförmigen Element 10, welches aus einem Duroplasten oder dgl. besteht. An einem Ende des Elementes 10 ist eine, über annähernd die gesamte Breite und in Längsrichtung des Elementes 10 verlaufende Ausnehmung 11 angeordnet, in die das erste Ende 8 des Kraftübertragungselementes 4 eingesteckt und mit der Kupplungseinrichtung 7 verbunden ist. Die Verbindung zwischen dem Kraftübertragungselement 4 und der Kupplungseinrichtung 7 erfolgt im vorliegenden Fall durch Prägungen 12, die in den Duroplasten der Kupplungseinrichtung 7 eingedrückt sind.

Zur Einrastung des Rollwagens und zur Erhöhung der Stabilität des Elementes 10 der Kupplungseinrichtung 7 sind an der Unterseite des Elementes 10 zwei im wesentlichen dreieckförmige Ansätze 13 ausgebildet, wobei der eine Ansatz 13 im Bereich der Ausnehmung 11 angeordnet ist. Beide Ansätze 13 sind als plattenförmige Elemente ausgebildet, die in Längsrichtung des Elementes 10 auf dessen Mittellinie angeordnet sind.

An dem der Ausnehmung 11 gegenüberliegenden Ende des Elementes 10 ist das zweite Ende 9 des Kraftübertragungselementes 4 eingefädelt, wie nachfolgend anhand der Figur 3 beschrieben wird.

Die Kupplungseinrichtung 7 weist in diesem Bereich eine Öffnung 14 auf, die von einem Steg 15 in zwei Kammern 16 und 17 unterteilt ist. Der Steg 15 ist an seiner Oberfläche 18 mit quer zur Längsrichtung des Kraftübertragungselementes 4 verlaufenden Zacken strukturiert, welche der Erhöhung der Reibkraft zwischen dem Kraftübertragungselement 4 und der Kupplungseinrichtung 7 dienen. Darüberhinaus ist der Steg 15 an seiner dem Ende 8 des Kraftübertragungselementes abgewandten Seitenfläche 19 abgeschrägt, wobei die Öffnung 14 im Bereich des dem ersten Ende 8 des Kraftübertragungselementes 4 abgewandten Ende 20 des Kupplungselementes 7 begrenzenden Steg ebenfalls unter dem Winkel der Seitenfläche 19 des Steges 15 abgeschrägt ist. Die schräge Seitenfläche 19 des Steges 15 verläuft hierbei parallel zu der Schrägfläche 21 des das Kupplungselement 7 begrenzenden Steges.

Die Verbindung der beiden Enden 8 und 9 des Kraftübertragungselementes 4 mittels der Kupplungseinrichtung 7 erfolgt nun dadurch, daß das erste Ende 8 des Kraftübertragungselementes 4, wie voranstehend ausgeführt, fest mit der Kupplungseinrichtung verbunden ist. Das zweite Ende 9 des Kraftübertragungselementes 4 ist durch die dem ersten Ende 8 des Kraftübertragungselementes 4 näherliegende Kammer 16 der Öffnung 14 hindurchgeführt und über den Steg 15 derart gelegt, daß das Kraftübertragungselement 4 mit der Verzahnung der Oberfläche 18 des Steges 15 in Kontakt kommt. Anschließend verläuft das zweite Ende 9 des Kraftübertragungselementes 4 durch die zweite Kammer 17 der Öffnung 14 und wird an der Unterseite der Kupplungseinrichtung 7 derart umgelenkt, daß es zwischen der Kupplungseinrichtung 7 und dem Kraftübertragungselement 4 zur Anlage kommt.

Es ist erkennbar, daß sich das Kraftübertragungselement 4 bei in axialer Richtung der Kupplungseinrichtung angreifenden Kraftkomponenten selbsttätig zuzieht, ohne daß das Ende 9 des Kraftübertragungselementes 4 aus der Öffnung 14 herausgezogen werden kann. Hierzu sind die voranstehend geschilderten verschiedenen Elemente zur Erhöhung der Reibkraft zwischen dem Kraftübertragungselement 4 und der Kupplungseinrichtung 7 vorgesehen.

Darüberhinaus ist erkennbar, daß die beiden Enden 8, 9 des Kraftübertragungselementes 4 mittels der Kupplungseinrichtung 7 zu einem längenveränderlichen Endlosband verbunden sind. Das Kraftübertragungselement 4 kann, wie in Figur 1 dargestellt, im Untertrum in unmittelbarer Nähe des Rollenlaufwagens 6 oder eines anderen Mitnehmers angeordnet sein. Es ist aber auch möglich, daß die Kupplungseinrichtung 7 im Bereich des Obertrums des Kraftübertragungselementes 4 angeordnet ist. Darüberhinaus ist es denkbar, das Ende 9 des Kraftübertragungselementes 4 gemeinsam mit dem Ende 20 der Kupplungseinrichtung 7 mit einem Schiebeelement zusammenzuhalten. Hierbei läuft auch das Kraftübertragungselement 4 durch dieses Schiebeelement.

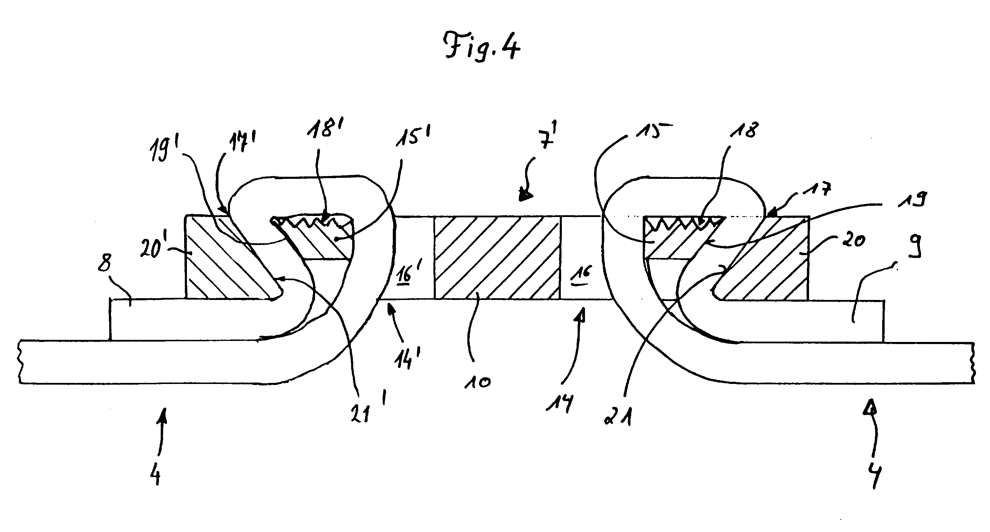

In Figur 4 ist eine Ausführungsform der Kupplungseinrichtung beschrieben, dort bezeichnet mit 7', die beide Enden 8 und 9 des bandförmigen Kraftübertragungselementes 4 so aufnimmt, wie dies in Figur 3 nur hinsichtlich des rechten Bandendes 9 dargestellt ist. Der Vorteil besteht darin, daß man beide Bandenden von Hand und ohne größere Aufwendungen wie Klebetechnik, Verschraubung oder dergleichen durch das Kupplungselement 7' miteinander verbinden kann. In der linken Seite der Darstellung ist die rechte Seite praktisch spiegelsymmetrisch wiedergegeben, entsprechende Bezugsziffern sind mit "Strich oben" gekennzeichnet. Insoweit treffen daher alle Ausführungen, die im Zusammenhang mit Figur 3 für das Bandende 9 gelten, nunmehr auch sinngemäß für das Bandende 8 zu. Die Kupplungseinrichtung 7' ist zu diesem Zwecke mit einer Öffnung 16' bzw. 17' und einem Steg 15' versehen, wie dies aus Figur 4 ersichtlich ist. Der Steg 15' ist ebenso wie der Steg 15 mit einer verzahnten Oberfläche 18' versehen, auch sind die schrägen Seitenflächen 19' und 21' entsprechend demjenigen für das Ende 9 des Kraftübertragungselementes 4 gleichzusetzen. Sinngemäß gilt dies auch für das Ende 20' des Kupplungselementes 7', das nunmehr dem Ende 9 des Kraftübertragungselementes 4 gegenüberliegt.

Der Steg 15 kann als Klemmteil ausgebildet werden, derart, daß die Schlaufe, die das gurtförmige Antriebselement 4 um den Steg 15 herum bildet, diesen in die Öffnung 14 hineinzieht, wobei die Bemessungen dieser Öffnung dann derart getroffen sind, daß bei Zugbeanspruchung und damit Abwärtsbewegung des Steges 15 eine Verklemmung zwischen den Seitenwandungen der Öffnung 16 platz greift. Die Bemessung der Öffnung 14 muß daran angepaßt sein.

## Patentansprüche

1. Kraftübertragungselement, insbesondere zugkraftübertragendes Gurtband für die Bewegung eines longitudinal geführt bewegbaren Gegenstand, insbesondere für einen entlang einer Führungsschiene hin- und hergehend bewegbaren Mitnehmer, vorzugsweise zur Ankupplung an ein Torblatt, bevorzugt eines Garagentores oder dergleichen, welches aus zwei Trumen besteht, zumindest ein Antriebsglied und zumindest ein Abtriebsglied reibungsschlüssig über einen Teilumfangsbereich umschlingt und über diese Elemente hin- und herbewegbar ist, wobei zwei Enden des Kraftübertragungselementes über eine Kupplungseinrichtung zu einem längenveränderlichen Endlosband verbunden sind, welche eine Öffnung für wenigstens das zweite Ende des Kraftübertragungselementes hat, die von einem Steg in zwei Kammern unterteilt ist, wobei das Kraftübertragungselement über den Steg umgelenkt ist,
**dadurch gekennzeichnet,**
daß der Steg (15) an seiner, dem ersten Ende (18) des Kraftübertragungselementes (4) abgewandten Seitenfläche (19) unter einem Winkel abgeschrägt ist und daß ein die Öffnung (14) im Bereich des, dem ersten Ende (8) des Kraftübertragungselementes (4) abgewandten Ende (20) des Kupplungselementes (7) begrenzender Steg ebenfalls unter dem Winkel abgeschrägt ist, wobei die Schrägfläche (19, 21) im wesentlichen parallel zueinander verlaufen.

2. Kraftübertragungselement nach Anspruch 1,
**dadurch gekennzeichnet,**
daß die Kupplungseinrichtung (7) in dem Trum angeordnet ist, der dem Trum mit der Verbindung zwischen dem Kraftübertragungselement (4) und dem longitudinal geführten Gegenstand gegenüberliegt.

3. Kraftübertragungselement nach Anspruch 1,
**dadurch gekennzeichnet,**
daß die Kupplungseinrichtung (7) fest mit einem ersten Ende (8) des Kraftübertragungselementes (4) verbunden ist.

4. Kraftübertragungselement nach Anspruch 1 oder 2,
**dadurch gekennzeichnet,**
daß die Kupplungseinrichtung mit beiden Enden des Kraftübertragungselementes lose, d. h. durch klemmende Schlaufenbildung des jeweiligen Endes, verbunden ist.

5. Kraftübertragungselement nach Anspruch 1,
**dadurch gekennzeichnet,**
daß der Steg (15) an seiner einen Oberfläche (18) strukturiert, vorzugsweise quer zur Längsrichtung des Kraftübertragungselementes (4) geriffelt ausgebildet ist.

6. Kraftübertragungselement nach Anspruch 1,
**dadurch gekennzeichnet,**
daß das Kraftübertragungselement (4) im Bereich beider Oberflächen strukturiert ausgebildet ist.

7. Kraftübertragungselement nach Anspruch 1,
**dadurch gekennzeichnet,**
daß die Kupplungseinrichtung (7) im Bereich der Verbindung zwischen dem Kraftübertragungselement (4) und dem longitudinal geführten Gegenstand angeordnet ist.

8. Kraftübertragungselement nach einem der Ansprüche 1 bis 6,
**dadurch gekennzeichnet,**
daß die beiden unmittelbar hinter dem Steg (15) aufeinanderliegenden Bereiche des Kraftübertragungselementes (4) mit einem Schiebeelement zusammengehalten sind.

## Claims

1. A force transmitting element, in particular a tractive-force-transmitting belt for moving an object which is moveable in a longitudinally guided manner, in particular for a carrier moveable back and forth along a guide rail, preferably for coupling to a door leaf, preferably a garage door or the like, which force transmitting element comprises two strands, embraces at least one drive element and at least one driven element in friction-contacting manner over a part of their periphery, and is moveable back and forth via these elements, where two ends of the force transmitting element are connected via a coupling device to form an endless band which is variable in length, which coupling device has an opening for at least the second end of the force transmitting element, said opening being divided into two chambers by a web, and where the force transmitting element is deflected across the web, characterised in that on its side surface (19) facing away from the first end (18) of the force transmitting element (4) the web (15) is slanted at an angle and that a web which delimits the opening (14) in the region of that end (20) of the coupling element (7) facing away from the first end (8) of the force transmitting element (4) is likewise slanted at an angle, where the sloping surfaces (19, 21) extend substantially in parallel with one another.

2. A force transmitting element according to Claim 1, characterised in that the coupling device (7) is arranged in the strand which opposes the strand with the connection between the force transmitting element (4) and the longitudinally guided object.

3. A force transmitting element according to Claim 1, characterised in that the coupling device (7) is permanently connected to a first end (8) of the force transmitting element (4).

4. A force transmitting element according to Claim 1 or 2, characterised in that the coupling device is connected to both ends of the force transmitting element slackly, i.e. by looping of the respective end in clamping fashion.

5. A force transmitting element according to Claim 1, characterised in that on one of its surfaces (18) the web (15) is structured, preferably corrugated transversely to the longitudinal direction of the force transmitting element (4).

6. A force transmitting element according to Claim 1, characterised in that the force transmitting element (4) is structured in the region of both surfaces.

7. A force transmitting element according to Claim 1, characterised in that the coupling device (7) is arranged in the region of the connection between the force transmitting element (4) and the longitudinally guided object.

8. A force transmitting element according to one of Claims 1 to 6, characterised in that the two regions of the force transmitting element (4) disposed one upon another directly behind the web (15) are held together by a slide element.

## Revendications

1. Elément de transmission de force notamment courroie pour transmettre une force de traction servant à l'entraînement d'un objet guidé longitudinalement, notamment d'un organe d'entraînement mobile suivant un mouvement alternatif le long d'un rail de guidage, de préférence pour coupler un panneau de porte de préférence d'une porte de garage ou d'un moyen analogue, cet élément se composant de deux brins, dont au moins, cet élément de transmission entourant sur au moins une partie de leur périphérie au moins un élément d'entraînement et un élément entraîné, par une liaison par frottement, et passant suivant un mouvement de va-et-vient sur ces éléments, les deux extrémités de l'élément de transmission de force étant reliées par une installation de liaison pour former une bande sans fin de longueur variable, ayant une ouverture au moins pour la seconde extrémité de l'élément de transmission de force, cette ouverture étant subdivisée en deux chambres par une branche, l'élément de transmission de force étant dévié par dessus la branche,
caractérisé en ce que
la branche (15) présente une surface latérale (19) opposée à celle de la première extrémité (18) de l'élément de transmission de force (4), et inclinée suivant un angle et une branche délimitant l'ouverture (14) de l'extrémité (20) de l'élément de liaison (7), du côté opposé de celui de la première extrémité (8) de l'élément de transmission de force (4), est également inclinée suivant un angle, les surfaces inclinées (19, 21) étant essentiellement parallèles l'une à l'autre.

2. Elément de transmission de force selon la revendication 1,
caractérisé en ce que
le dispositif de liaison (7) est prévu dans le brin opposé au brin avec la liaison entre l'élément de transmission de force (4) et l'objet guidé longitudinalement.

3. Elément de transmission de force selon la revendication 1,
caractérisé en ce que
le dispositif de liaison (7) est relié solidairement à une première extrémité (8) de l'élément de transmission de force (4).

4. Elément de transmission de force selon la revendication 2 ou 4,
caractérisé en ce que
le dispositif de liaison est relié librement aux deux extrémités de l'élément de transmission de force, c'est-à-dire en formant une boucle pincée à chaque extrémité.

5. Elément de transmission de force selon la revendication 1,
caractérisé en ce que
la branche (15) a une surface supérieure (18) structurée, de préférence moletée, transversalement à la direction longitudinale de l'élément de transmission de force (4).

6. Elément de transmission de force selon la revendication 1,
caractérisé en ce que
les deux surfaces supérieures de l'élément de transmission de force (4) sont structurées.

7. Elément de transmission de force selon la revendication 1,
caractérisé en ce que
le dispositif de liaison (7) est prévu dans la zone de liaison entre l'élément de transmission de force (4) et l'objet guidé longitudinalement.

8. Elément de transmission de force selon l'une des revendications 1 à 6,
caractérisé en ce que
les deux zones de l'élément de transmission de force (4) opposées directement derrière la branche (15), sont maintenues réunies par un élément coulissant.
